# EUROPÄISCHE PATENTSCHRIFT

(11) **EP 0 498 154 B1**
(45) Veröffentlichungstag und Bekanntmachung des Hinweises auf die Patenterteilung: **12.10.1994**
(21) Anmeldenummer: 92100228.3
(22) Anmeldetag: 09.01.1992
(51) Int. Cl.: B23K 35/28

(54) **Schweiss- und/oder Lötmaterial**
Welding or soldering material
Matériau pour soudage ou brasage

(30) Priorität: 06.02.1991 DE 9101303 U
(43) Veröffentlichungstag der Anmeldung: 12.08.1992
(73) Patentinhaber: Müller, Ernst, D-74706 Osterburken (DE); Winkler, Christa, D-74706 Osterburken (DE)
(72) Erfinder: Müller, Ernst, D-74706 Osterburken (DE); Winkler, Christa, D-74706 Osterburken (DE)
(74) Vertreter: Magenbauer, Rudolf, Dipl.-Ing.

(56) Entgegenhaltungen:
- WO-A-85/03253
- DE-A- 3 134 899
- DE-U- 9 101 303
- FR-A- 935 569
- FR-A- 1 260 326
- US-A- 3 341 680
- US-A- 4 861 681

## Beschreibung

Die Erfindung betrifft ein Schweiß- und/oder Lötmaterial bestehend aus einer Legierung mit den Bestandteilen Zink (Zn), Aluminium (Al) und Kupfer (Cu).

Ein bekanntes Schweiß- und/oder Lötmaterial dieser Art besteht aus 93 - 95 Gew% Zn, 4 - 6 Gew% Al und 1 Gew% Cu. Dieses Material wird beispielsweise zum Hartlöten von Aluminium verwendet. Wie bei vielen anderen Lötmaterialien ist auch bei diesem bekannten Lötmaterial ein Flußmittelzusatz erforderlich.

Eine Aufgabe der vorliegenden Erfindung besteht darin, ein Material zum Schweißen und insbesondere zum Löten aufzuzeigen, das auch bei schwer zu lötenden Materialien ohne Flußmittelzusatz auskommt.

Diese Aufgabe wird erfindungsgemäß durch die in Anspruch 1 definierte Legierungszusammensetzung gelöst. Weitere, bevorzugte Ausführungsformen der beanspruchten Legierung nach Anspruch 1 sind in den abhängigen Ansprüchen 2 bis 4 enthalten. Es hat sich gezeigt, daß durch einen geringen Silizium-Zusatz kein Flußmittel mehr erforderlich ist. Dennoch sind ansonsten schwierig durchzuführende Schweiß- und Lötarbeiten in hervorragender Weise durchführbar. So eignet sich dieses Material zum Schweißen von Zink-Basis-Metallen, zum Hartlöten von Aluminium, zum Löten von galvanisiertem Metall u.dgl.

Der geringe Si-Anteil beträgt 0,2 - 1 Gew%, wobei mit einem Anteil von 0,5 Gew% die besten Ergebnisse erzielt wurden.

Die Anteile der übrigen Bestandteile ergeben sich zu 85 - 90 Gew% Zn, 8 - 12 Gew% Al und 2 - 4 Gew% Cu. Die besten Ergebnisse wurden mit einer Lötlegierung erzielt, die im wesentlichen 87 Gew% Zn, 10 Gew% Al, 2,5 Gew% Cu und 0,5 Gew% Si aufweist. Der Schmelzpunkt einer solchen Legierung beträgt 390^{o}C. Neben dem Si-Zusatz tragen auch die gegenüber der bekannten Legierung erhöhten Anteile an Al und Cu zu den verbesserten Eigenschaften dieses Schweiß- und/oder Lötmaterials bei. Dieses Schweiß- und/oder Lötmaterial kann in an sich bekannter Weise als Draht- oder Stangenmaterial hergestellt werden, es ist jedoch auch möglich, dieses Material in Pulverform oder als Emulsion insbesondere zum Löten einzusetzen.

## Patentansprüche

1. Schweiß- und/oder Lötmaterial bestehend aus einer nur vier Bestandteile aufweisenden Legierung mit einem Si-Anteil von 0,2 - 1 Gew%, einem Zn-Anteil von 85 - 90 Gew%, einem Al-Anteil von 8 - 12 Gew% und einem Cu-Anteil von 2 - 4 Gew%.

2. Schweiß- und/oder Lötmaterial nach Anspruch 1, dadurch gekennzeichnet, daß im wesentlichen 87 Gew% Zn, 10 Gew% Al, 2,5 Gew% Cu und 0,5 Gew% Si als Legierungsbestandteile enthalten sind.

3. Schweiß- und/oder Lötmaterial nach Anspruch 1 oder 2, gekennzeichnet durch die Ausbildung als Draht- oder Stangenmaterial.

4. Schweiß- und/oder Lötmaterial nach einem der Ansprüche 1 bis 3, gekennzeichnet durch die Ausbildung als Pulver oder Emulsion.

## Claims

1. Welding and/or soldering material, comprised of an alloy with only four constituents, with an Si content of 0.2 - 1% by weight, a Zn content of 85 - 90% by weight, an Al content of 8 - 12% by weight and a Cu content of 2 - 4% by weight.

2. Welding and/or soldering material according to claim 1, characterized in that it essentially contains 87% Zn by weight, 10% Al by weight, 2.5% Cu by weight and 0.5% Si by weight as alloy constituents.

3. Welding and/or soldering material according to claim 1 or 2, characterized in that it is in wire or rod form.

4. Welding and/or soldering material according to any of claims 1 to 3, characterized in that it is in powder or emulsion form.

## Revendications

1. Matériau pour la soudure et/ou le brasage composé d'un alliage ne comportant que quatre éléments constitutifs avec une proportion de Si comprise entre 0,2 et 1 % en poids, une proportion de Zn comprise entre 85 et 90 % en poids, une proportion de Al comprise entre 8 et 12 % en poids et une proportion de Cu comprise entre 2 et 4 % en poids.

2. Matériau pour la soudure et/ou le brasage selon la revendication 1, caractérisé en ce que la composition de l'alliage est principalement de 87 % en poids de Zn, 10 % en poids de Al, 2,5 % en poids de Cu et 0,5 % en poids de Si.

3. Matériau pour la soudure et/ou le brasage selon la revendication 1 ou 2, caractérisé en ce qu'il est conformé en fil ou en barre.

4. Matériau pour la soudure et/ou le brasage selon l'une des revendications 1 à 3, caractérisé en ce qu'il est sous forme de poudre ou l'émulsion.
